# EUROPEAN PATENT APPLICATION

(11) **EP 1 827 007 A2**
(43) Date of publication of application: **29.08.2007**
(21) Application number: 07101013.6
(22) Date of filing: 23.01.2007
(51) Int. Cl.: H04N 3/23

(54) **Video displaying apparatus and method**

(30) Priority: 28.02.2006 KR 20060019242
(71) Applicant: Samsung Electronics Co., Ltd., Suwon-si 442-742 Gyeonggi-Do (KR)
(72) Inventor: Jung, Jae-wook, Taean-eup Hwaseong-si Gyeonggi-do (KR); Kim, Sung-doug, Yeongtong-gu Suwon-si Gyeonggi-do (KR)
(74) Representative: Perkins, Dawn Elizabeth

(57) **Abstract**

A video displaying apparatus and a method are provided. The video displaying apparatus includes a signal input unit which receives a video signal comprising video information and synchronization information of a video formed by a plurality of pixels; a video displaying unit which generates an electron beam based on of the video information to display the video; a deflecting unit which performs a scanning operation by deflecting the electron beam based on the synchronization information; and a video correcting unit which corrects the video information so that locations of displayed pixels corresponding to the corrected video information coincide with locations of pixels corresponding to the video information before the correction. With this configuration, a deflection correcting circuit is removed to reduce power loss and a production cost. In addition, video quality can be improved by digital deflection correction.

## Description

Apparatuses and methods consistent with the present invention relate to displaying video, and more particularly, to video displaying capable of reducing electrical power loss and production cost as well as improving video quality.

Generally, a video displaying apparatus such as a television (TV) receiver, a monitor and the like receives a video signal from a TV broadcasting station, a digital versatile disc (DVD) player, a computer and the like, processes the received video signal, and displays a video based on the processed video signal. Among these video displaying apparatuses, a cathode ray tube (CRT) type video displaying apparatus displays a video by scanning a fluorescent screen with an electron beam line by line from left to right according to the video signal. At this time, the video displaying apparatus performs the scanning operation by magnetically deflecting the electron beam. The video displaying apparatus may include a horizontal deflection coil. The electron beam is deflected by controlling current flowing through the horizontal deflection coil.

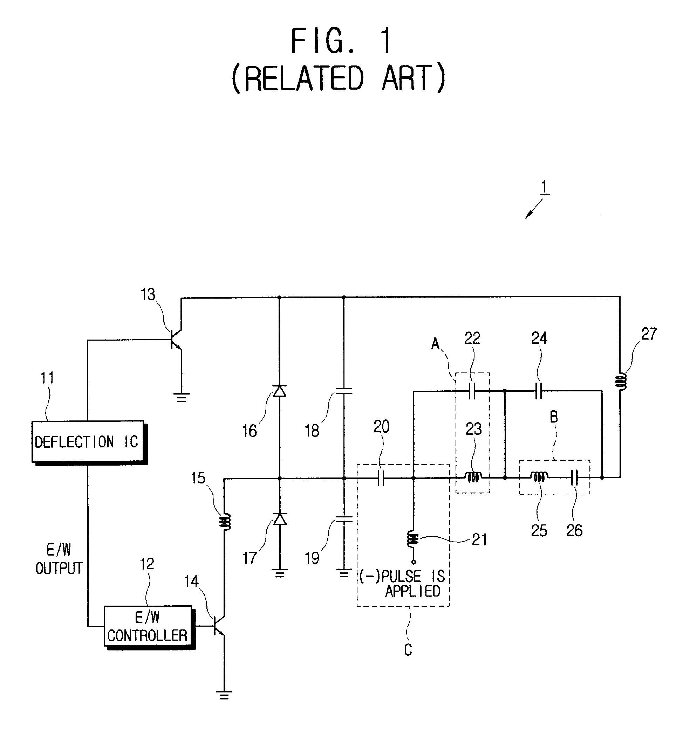

Figure 1 illustrates a deflection circuit 1 of a related art video displaying apparatus. A deflection integrated circuit (IC) 11 drives a first transistor 13 based on synchronization information of the video signal. If a driving signal of a high level is applied to a base terminal of the first transistor 13, the first transistor 13 becomes conductive, thereby allowing a deflection current to flow through the horizontal deflection coil 27. Then, if a driving signal of a low level is applied to the base terminal of the first transistor 13, the first transistor 13 becomes non-conductive, thereby allowing the deflection current flowing through the horizontal deflection coil 27 to be cut off, and then a first capacitor 18 and the horizontal deflection coil 27, and a second capacitor 19 and a coil 15 cause a resonance, thereby generating a voltage. When the resonance disappears, current flows through a first diode 16, completing one cycle of a basic deflection operation. An East/West (E/W) controller 12 adjusts a horizontal pincushion using a parabola signal.

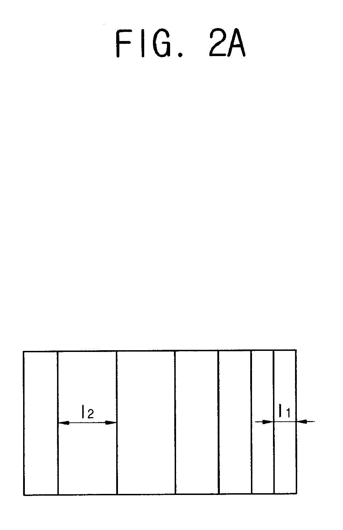

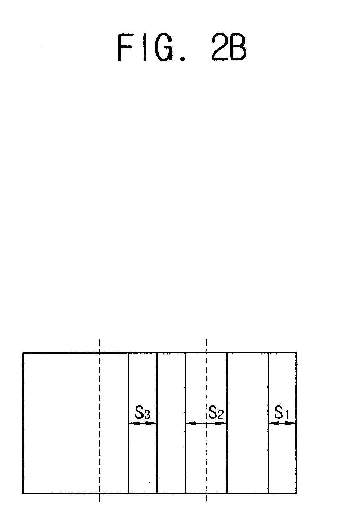

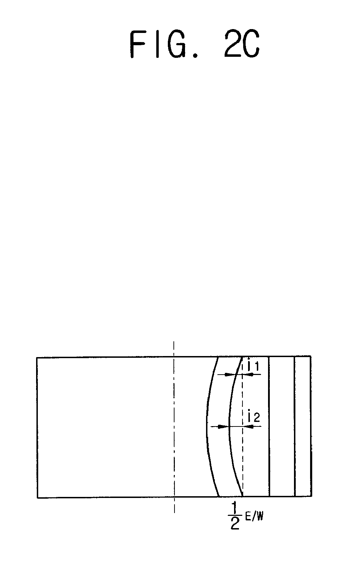

However, a distortion appears in the video displayed on a screen of the video displaying apparatus because of CRT properties. FIGs. 2A through 2C illustrate properties of the video displayed by the video displaying apparatus. Here, Figure 2A illustrates a distortion state that the screen becomes wider from a right area l₁ to a left area l₂, Figure 2B illustrates a distortion state that an area S₂ centering on a two-third point from the left in a horizontal direction is shown to be broader than an edge area S₁ or a middle area S₃ on the screen, and Figure 2C illustrates a distortion state that a middle portion i₂ leans closer toward a center portion than an upper portion i₁ or a lower portion within a one-second E/W area. Accordingly, the video displaying apparatus needs to correct these distortion states. Correction for the distortion illustrated by Figure 2A is referred to as a linearity correction, correction for the distortion illustrated by Figure 2B is referred to as a second correction, and correction for the distortion illustrated by Figure 2C is referred to as an inner pincushion correction.

The related art video displaying apparatus further includes a linearity correction capacitor 22 and a linearity correction coil 23 (referring to "A" of Figure 1) to perform the linearity correction. When the first transistor 13 becomes conductive, a deflection current flowing through the horizontal deflection coil 27 is decreased by an internal resistance of the horizontal deflection coil 27. To protect this deflection current from being decreased, the linearity correction coil 23 as a saturable coil using a magnet is used. The linearity correction coil 23 has a property that current increases in saturation of the linearity correction coil 23. The linearity correction coil 23 is connected in series with the horizontal deflection coil 27 to increase current flowing through the horizontal deflection coil 27.

In the meanwhile, since the CRT has a flat front plane, there occurs a path difference of an electron beam between a center and an edge of the screen. To correct this path difference (hereinafter, it may be also referred to as "S-correction"), the video displaying apparatus may further include an s-correction capacitor 24.

However, as the CRT has a broader viewing angle and a flatter front plane, the second correction is needed. The conventional video displaying apparatus further includes a second correction capacitor 26 and a second correction coil 25 (referring to "B" of Figure 1) to perform the second correction. The second correction capacitor 26 and the second correction coil 25 are connected to both terminals of the s-correction capacitor 24, respectively. A predetermined s-correction is modulated by a resonance caused by the second correction capacitor 26 and the second correction coil 25.

Further, the conventional video displaying apparatus further includes an inner correction capacitor 20 and an inner correction coil 21 (referring to "C" of Figure 1) to perform the inner pincushion correction. A (-) pulse voltage is applied to the inner correction coil 21. By overlapping a signal having a parabolic waveform and the (-) pulse voltage, the inner correction capacitor 20 and the inner correction coil 21 modulates a wave shape to strengthen a straight force of the signal having the parabolic waveform in a surrounding area over a center area, thereby correcting an inner pincushion.

However, according to the related art video displaying apparatus, all correction circuits ("A" through "C" of Figure 1) for correcting these video distortion states are realized with capacitors and/or coils. Accordingly, a deflection force of a horizontal deflection coil is decreased. To make up for the decreased deflection force, a power voltage has to be increased, which results in increase in power consumption.

Also, the temperature of a whole circuit may rises due to these correction circuits ("A" through "C" of Figure 1) realized with capacitors and/or coils. Heat generated according to the rising of the temperature may cause current stress and deteriorate stability of the circuits in the long term. To solve this problem, an additional heat-resistant device is needed, thereby increasing production cost.

In addition, production costs such as material cost, and assembly cost and the like for these correction circuits ("A" through "C" of Figure 1) are also disadvantageously increased.

Moreover, when a viewing angle is more than 120 degrees, the correction circuits ("A" through "C" of Figure 1) realized with capacitors and/or coils are not capable of performing the inner pincushion correction and the like, which results in deterioration of video quality.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Accordingly, it is an aspect of the present invention to provide a video displaying apparatus capable of decreasing electrical power loss by strengthening a deflection force, and a control method thereof.

The present invention provides a video displaying apparatus and method capable of improving circuit stability and decreasing product costs by removing correction circuits to decrease the temperature of a circuit.

The present invention also provides a video displaying apparatus and method capable of designing a circuit without difficulty by removing correction circuits.

The present invention also provides a video displaying apparatus and method capable of improving video quality by correcting a video distortion precisely, and a control method thereof.

According to an aspect of the present invention, there is provided a video displaying apparatus including a signal input unit to which a video signal having video information and synchronization information of a video formed by a plurality of pixels is input; a video displaying unit which generates an electron beam on the basis of the video information so as to display the video; a deflecting unit which performs a scanning operation by deflecting the electron beam on the basis of the synchronization information; and a video correcting unit which corrects the video information so that locations of displayed pixels corresponding to the corrected video information coincide with locations of pixels corresponding to the video information before the correction.

The video displaying apparatus may further include a user input unit to which an instruction is input from a user; and a controller which controls the video correcting unit to correct the video information according to the user's instruction.

The video correcting unit may comprise a DSP (digital signal processor) which adjusts values of the pixels to correct the video information.

The video correcting unit may further include an A/D converter which converts the video signal of an analog type into a video signal of a digital type to be output to the DSP; and a D/A converter which converts the digital type video signal processed by the DSP into an analog type video signal.

The video correcting unit may increase or decrease the video in size linearly along a horizontal direction so that each video pixel is horizontally displayed at uniform intervals.

The video correcting unit may decrease in size an area centering on a two-third point of a video width from the left of the video in a horizontal direction relatively as compared with other areas so that each video pixel is horizontally displayed at uniform intervals.

The video correcting unit may correct the video information so that a parabolic type as a distortion occurring in an area within a one-quarter width with respect to the center of the video is substantially converted into a straight line type vertically.

The video displaying unit may comprise a CRT having a viewing angle of more than 120 degrees.

According to another aspect of the present invention, there is provided a displaying method of displaying video including receiving a video signal having video information and synchronization information of a video formed by a plurality of pixels; generating an electron beam on the basis of the video information; displaying the video by performing a scanning operation by deflecting the electron beam on the basis of synchronization information; and correcting the video information so that locations of displayed pixels corresponding to the corrected video information coincide with locations of pixels corresponding to the video information before the correction.

The correcting the video information may include converting values of the pixels by performing a digital signal processing to correct the video information.

The correcting the video information may further include converting the video signal of an analog type into a video signal of a digital type; and converting the digital type video signal having the converted pixel values into an analog type video signal.

The correcting the video information may include increasing or decreasing the video in size linearly along a horizontal direction so that each video pixel is horizontally displayed at uniform intervals.

The correcting the video information may include decreasing an area centering on a two-third point of a video width from the left of the video in a horizontal direction relatively as compared with other areas so that each video pixel is horizontally displayed at uniform intervals.

The correcting the video information may include correcting the video information so that a parabolic type as a distortion occurring in an area within a one-quarter width with respect to the center of the video is substantially converted into a straight line type vertically.

The above and/or other aspects of the present invention will become apparent and more readily appreciated from the following description of the exemplary embodiments, taken in conjunction with the accompanying drawings of which:
Figure 1 is a circuit diagram of a deflection circuit of a related art video displaying apparatus;
Figures 2A through 2C are views showing properties of a video displayed by a video displaying apparatus;
Figure 3 is a block diagram showing a configuration of a video displaying apparatus according to an exemplary embodiment of the present invention;
Figure 4 is a circuit diagram showing a configuration of a horizontal deflecting unit according to an exemplary embodiment of the present invention;
Figure 5 is a block diagram showing a configuration of a video correcting unit according to an exemplary embodiment of the present invention; and
Figure 6 is a control flowchart illustrating a method of the video displaying a video according to the exemplary embodiment of the present invention.
Reference will now be made in detail to the exemplary embodiments of the present invention, examples of which are illustrated in the accompanying drawings, wherein like reference numerals refer to like elements throughout.

Hereinafter, an exemplary embodiment of the present invention will be in detail described with reference to the accompanying drawings.

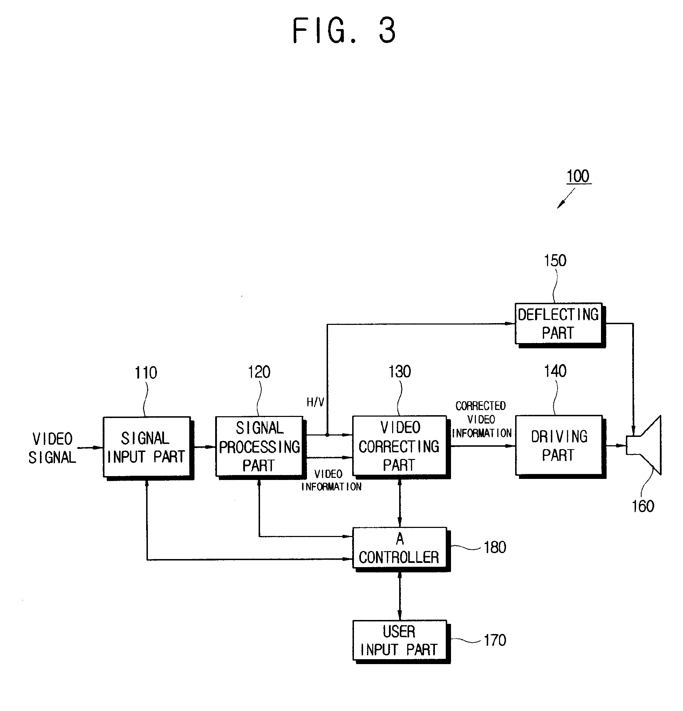

Figure 3 is a block diagram showing a configuration of a video displaying apparatus 100 according to an exemplary embodiment of the present invention. The video displaying apparatus 100 is realized with a CRT type TV, a CRT type monitor, or the like. As illustrated, the video displaying apparatus 100 includes a signal input unit 110, a signal processing unit 120, a video correcting unit 130, a driving unit 140, a deflecting unit 150, a video displaying unit 160, a user input unit 170 and a controller 180.

The signal input unit 110 receives a video signal including video information and synchronization information. The video signal also includes a TV broadcasting signal transmitted from a TV broadcasting station (not shown). The video information includes luminance information and chrominance information of an image which is constructed with a plurality of pixels. The synchronization information includes horizontal synchronization information and vertical synchronization information. In this case, the signal input unit 110 includes a tuner (not shown) for receiving a broadcasting signal. Under control of the controller 180, the tuner receives a broadcasting signal of a frequency corresponding to a channel selected by a user. Also, the signal input unit 110 may receive video signals transmitted from a DVD player, a computer system, or the like.

The signal processing unit 120 obtains video information by processing the video signal input from the signal input unit 110. For example, the processing operation of the signal processing unit 120 may include a comb processing filter for separating a luminance (Y) signal and a chrominance (C) signal from a composite video baseband signal (CVBS), a color decoding for separating original color-difference signals (U signal and V signal) from the chrominance signal (C signal), and a format conversion for converting a YUV signal into an RGB signal. Also, when the RGB signal is input from the signal inputting unit 110, the signal processing unit 120 may perform a color space conversion for converting an RGB signal into a YUV signal or the like to improve video quality and so on, as necessary. Additionally, the signal processing unit 120 obtains a horizontal synchronization signal and a vertical synchronization signal (H/V signals) based on the synchronization information of the video signal, for example, a synchronization pulse.

The video correcting unit 130 corrects the video information obtained by the signal processing unit 120 so that locations of displayed pixels corresponding to the corrected video information coincide with locations of pixels corresponding to the video information before the correction. That is, the video correcting unit 130 adjusts the locations of pixels corresponding to the video information so as to compensate for a video distortion that may be caused by a deflection. The video correcting unit 130 performs a digital signal processing operation to adjust pixel values of a video so that the video information is corrected.

The driving unit 140 drives the video displaying unit 160 to display the video corresponding to the video information corrected by the video correcting unit 130. The video displaying unit 160 includes a CRT having an electron gun (not shown) for generating an electron beam. The driving unit 140 drives the electron gun to generate the electron beam according to the video information.

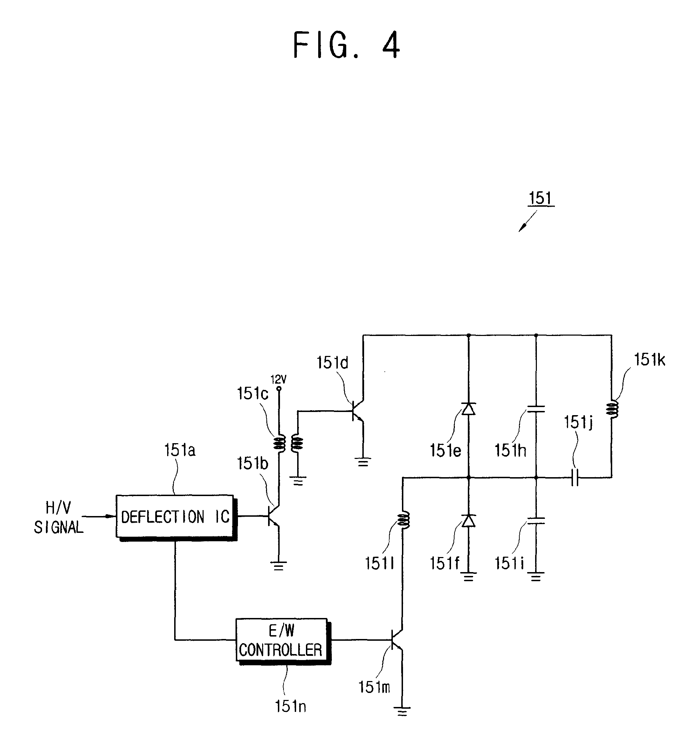

The deflecting unit 150 performs a scanning operation by deflecting the electron beam generated by the video displaying unit 160 on the basis of the H/V signals delivered from the signal processing unit 120. The deflection unit 150 includes a horizontal deflecting unit 151 for performing a horizontal deflecting operation and a vertical deflecting unit (not shown) for performing a vertical deflecting operation. Figure 4 is a circuit diagram of a configuration of the horizontal deflecting unit 151 according to an exemplary embodiment of the present invention.

The horizontal deflecting unit 151 includes a deflection IC 151a, a horizontal deflection coil 151k, a horizontal driving transistor 151d, two damper diodes 151e and 151f, first and second resonance capacitors 151h and 151i, a resonance coil 1511, an E/W controller 151n, and an E/W output transistor 151m. A transistor 151b and a transformer 151c are provided between an output terminal of the deflection IC 151a and a base terminal of the horizontal driving transformer 151d. The horizontal deflecting unit 151 further includes an s-correction capacitor 151j for s-correction.

The first resonance capacitor 151h and the horizontal deflection coil 151k, and the second resonance capacitor 151i and the resonance coil 1511 cause a resonance, thereby generating a resonance voltage. The deflection IC outputs a signal for driving the horizontal driving transistor 151d on the basis of the H/V signals delivered from the signal processing unit 120 so as to adjust a deflection current flowing through the horizontal deflection coil 151k. If a base voltage of the horizontal driving transistor 151d becomes higher, a video increased in size is displayed. Conversely, if the base voltage becomes lower, the video decreased in size is displayed. Also, the deflection IC 151a outputs an E/W signal for E/W adjustment. The E/W controller 151n drives the E/W output transistor 151m on the basis of the E/W signal.

The user input unit 170 receives an instruction to correct the video from a user. The user input unit 170 is realized with a remote-controller, a manipulating panel, or the like. Also, the user input unit 170 receives an instruction to select a channel from the user.

The controller 180 controls an overall operation of the video displaying apparatus 100. If the instruction to correct the video is input through the user input unit 170, correction information corresponding to the input instruction is delivered to the video correcting unit 130. If the instruction to select a channel is input through the user input unit 170, the controller 180 controls the signal inputting unit 110 so that a broadcasting signal corresponding to the selected channel is received.

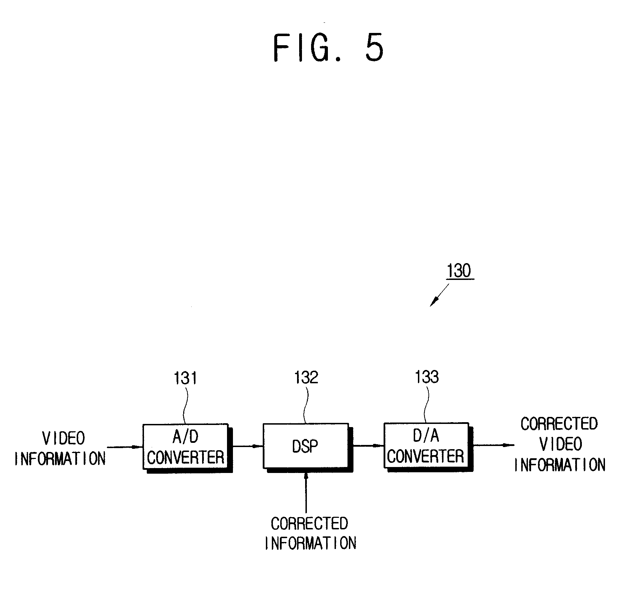

Hereinafter, the video correcting unit 130 according to an exemplary embodiment will be in detail described with reference to Figure 5. The video correcting unit 130 includes an analog to digital (A/D) converter 131, a digital signal processor (DSP) 132 and a digital to analog (D/A) converter 133. The A/D converter 131 receives an analog signal containing video information from the signal processing unit 120, and then, performs an A/D converting operation to convert the received analog signal into a digital signal.

The DSP 132 performs a predetermined correcting operation to correct the digital signal converted by the A/D converter 131. The DSP 132 changes values of pixels forming the video corresponding to the correcting operation to be performed. The DSP 132 performs at least one of a linearity correction, a second correction and an inner pincushion correction. In regard to determining which correction is performed by the DSP 132 among the linearity correction, the second correction and the inner pincushion correction, it may be in advance applied to products in a manufacturing process or it may depend on a user's setting. Also, in regard to the degree of the determined correction to be performed by the DSP 132, it may be in advance applied to products in a manufacturing process or it may depend on a user's setting. The user input unit 170 receives an instruction on the user's setting from the user. Set information (hereinafter, also referred to as correction information) may be stored in a predetermined memory (not shown). In this case, the DSP 132 performs the correcting operation according to the correction information stored in the memory.

For the linear correction, the DSP 132 linearly increases or decreases the video in size along a horizontal direction so that pixels of the input video signal are horizontally displayed at uniform intervals. In detail, as shown in Figure 2A, the DSP 132 performs a scaling operation for the video so that a right area l₁ is increased in width and a left area l₂ is decreased in width. For example, the DSP 132 vertically divides the video into 12 correcting areas and assigns a predetermined scaling factor to each correcting area. The DSP 132 scales each correcting area on the basis of the assigned scaling factor. In regard to the scaling factor for the linearity correction, it is preferable but not necessary that the scaling factor becomes smaller to the left side of the video and becomes larger to the right side.

The degree of scaling may be controlled by a user. That is, the user may control the degree of variation of scaling factors for a plurality of correcting areas. The user's instruction on the degree of variation of scaling factors is delivered to the DSP 132 as correction information. While observing the degree of linearity distortion of the video, the user can adjust the linearity of the video so that the video can be displayed optimally. The scaling factor optimized according to the adjustment of the linearity is stored in the memory. Then, the video displaying apparatus 100 displays the video with the linearity distortion corrected.

For the second correction, referring to Figure 2B, the DSP 132 performs a scaling operation to decrease the area S₂ centering on a two-third point from the left in a horizontal direction relatively as compared with other areas S₁ and S₃ so that each input video pixel is horizontally displayed at uniform intervals. It is preferable but not necessary that a scaling factor for the second correction is previously set. Also, the user can control the degree of variation of the scaling factor for the second correction.

The linear correction and the second correction may be simultaneously performed. In this case, a new scaling factor may be applied by considering the scaling factors for both of the linear correction and the second correction.

For the inner pincushion correction, referring to Figure 2C, the DSP 132 performs a scaling operation to increase or decrease the video in size so that a parabolic type as a distortion occurring in an area within a one-quarter width with respect to the center of the video is substantially converted into a straight line type vertically. In this exemplary embodiment, the area within the one-quarter width with respect to the center of the video is shown as an example of an area to be corrected. Also, the scaling factor for the inner pincushion correction may be increased or decreased according to a user's instruction so that the video can be displayed optimally.

The D/A converter 133 converts the digital signal corrected by the DSP 132 into an analog signal.

As described above, an analog system which uses coils and/or capacitors is often used to perform the linear correction, the second correction, and the inner pincushion correction. However, the present invention employs a digital system according to which the DSP 132 performs the linearity correction, the second correction and the inner pincushion correction.

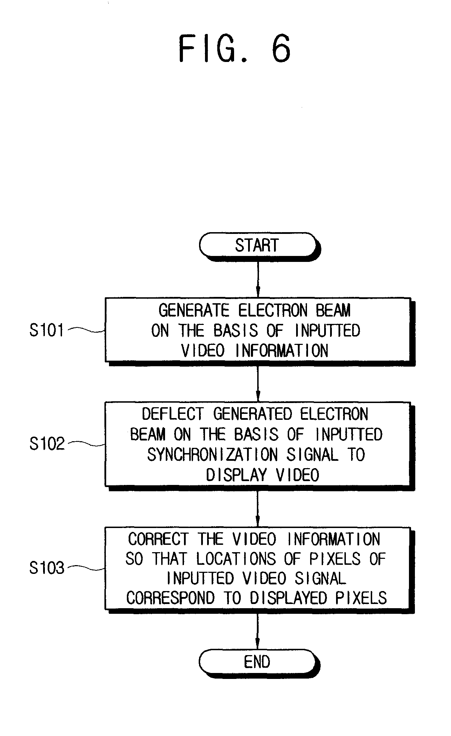

Hereinafter, a method of displaying video according to a exemplary embodiment of the present invention will be described with reference to Figure 6.

First, the video displaying apparatus 100 generates an electron beam on the basis of input video information at operation S101. Next, the video displaying apparatus 100 deflects the generated electron beam on the basis of an input synchronization signal so as to display a video at operation S102.

Next, the video displaying apparatus 100 corrects the video information so that locations of pixels of the input video signal correspond to displayed pixels at operation S103. At the operation S103, the video displaying apparatus 100 may correct the video information on the basis of information stored in a predetermined memory. Alternatively, the video displaying apparatus 100 may correct the video information on the basis of an input user's instruction.

Also, at the operation S103, the video displaying apparatus 100 converts an input analog video signal into a digital signal, performs a digital process for the digital signal to correct the video information, and then converts the processed digital signal into an analog signal.

Further, at the operation S103, the video displaying apparatus 100 may perform one of the linear correction, the second correction and the inner pincushion correction. For the linear correction, the video displaying apparatus 100 increases or decreases a video in size linearly along a horizontal direction so that each input video pixel is horizontally displayed at uniform intervals. For the second correction, the video displaying apparatus 100 performs a scaling operation to decrease in size an area centering on a two-third point of a video width from the left of the video in a horizontal direction relatively as compared with other areas so that each input video pixel is horizontally displayed at uniform intervals. For the inner pincushion correction, the video displaying apparatus 100 performs the scaling operation to increase or decrease the video in size so that a parabolic type as a distortion occurring in an area within a one-quarter width with respect to the center of the video is corrected to be substantially a straight line vertically.

As apparent from the above description, according to the exemplary embodiments of the present invention, a deflecting force is improved by digital deflecting correction, thereby decreasing power loss.

In addition, according to the exemplary embodiments of the present invention, a correction related to deflection is automatically performed without difficulty by digital deflecting correction, thereby improving productivity and decreasing a production cost.

In addition, according to the exemplary embodiments of the present invention, digital deflecting correction allows a correcting circuit to be removed to solve a problem of heat-emission of a unit, thereby improving circuit stability and decreasing a production cost.

In addition, according to the exemplary embodiments of the present invention, digital deflecting correction allows a correcting circuit to be removed, thereby simplifying a circuit design.

Furthermore, according to the exemplary embodiments of the present invention, video quality is improved by precisely correcting a video distortion by digital deflecting correction. Particularly, for a CRT having a large viewing angle, such as a slip type TV, properties of the second correction and the inner pincushion correction are nearly perfectly corrected.

Although a few exemplary embodiments of the present invention have been shown and described, it will be appreciated by those skilled in the art that changes may be made in these exemplary embodiments without departing from the scope of the invention as defined in the appended claims.

## Claims

1. A video displaying apparatus comprising:
a signal input unit (110) configured to receive a video signal comprising video information and synchronization information of a video made up of a plurality of pixels;
a video displaying unit (160) configured to generate an electron beam based on the video information to display the video;
a deflecting unit (150) configured to perform a scanning operation by deflecting the electron beam based on the synchronization information; and
a video correcting unit (130) configured to correct the video information so that locations of displayed pixels corresponding to the corrected video information coincide with locations of pixels corresponding to the video information before the correction.

2. The video displaying apparatus according to claim 1, further comprising:
a user input unit (170) configured to receive an instruction input by a user; and
a controller (180) configured to control the video correcting unit (130) to correct the video information according to the instruction.

3. The video displaying apparatus according to claim 1 or 2, wherein the video correcting unit (130) comprises a digital signal processor (DSP) (132) configured to adjust values of the pixels to correct the video information.

4. The video displaying apparatus according to claim 3, wherein the video correcting unit (130) further comprises:
an analog-to-digital converter (131) configured to convert the video signal of an analog type into a video signal of a digital type which is output to the digital signal processor (DSP) (132); and
a digital-to-analog converter (133) configured to convert the digital type video signal processed by the digital signal processor (DSP) (132) into an analog type video signal.

5. The video displaying apparatus according to any one of the preceding claims, wherein the video correcting unit (130) is configured to increase or decrease the video in size linearly along a horizontal direction so that each video pixel is horizontally displayed at uniform intervals.

6. The video displaying apparatus according to any one of the preceding claims, wherein the video correcting unit (130) is configured to decrease in size an area centering on a two-third point of a video width from the left of the video in a horizontal direction relatively as compared with other areas so that each video pixel is horizontally displayed at uniform intervals.

7. The video displaying apparatus according to any one of the preceding claims, wherein the video correcting unit (130) is configured to correct the video information so that a parabolic type distortion occurring in an area within a one-quarter width with respect to the center of the video is substantially converted into a straight line type vertically.

8. The video displaying apparatus according to any one of the preceding claims, wherein the video displaying unit (160) comprises a cathode ray tube having a viewing angle of more than 120 degrees.

9. A method of displaying video, the method comprising:
receiving a video signal having video information and synchronization information of a video made up of a plurality of pixels;
generating an electron beam based on the video information;
displaying the video by performing a scanning operation by deflecting the electron beam based on the synchronization information; and
correcting the video information so that locations of displayed pixels corresponding to the corrected video information coincide with locations of pixels corresponding to the video information before the correction.

10. The method according to claim 9, wherein the correcting the video information comprises:
converting values of the pixels by performing a digital signal processing to correct the video information.

11. The method according to claim 9 or 10, wherein the correcting the video information further comprises:
converting the video signal of an analog type into a video signal of a digital type; and
converting the digital type video signal having the converted pixel values into an analog type video signal.

12. The method according to any one of claims 9 to 11, wherein the correcting the video information comprises increasing or decreasing the video in size linearly along a horizontal direction so that each video pixel is horizontally displayed at uniform intervals.

13. The method according to any one of claims 9 to 12, wherein the correcting the video information comprises decreasing an area centering on a two-third point of a video width from the left of the video in a horizontal direction relatively as compared with other areas so that each video pixel is horizontally displayed at uniform intervals.

14. The method according to any one of claims 9 to 13, wherein the correcting the video information comprises correcting the video information so that a parabolic type distortion occurring in an area within a one-quarter width with respect to the center of the video is substantially converted into a straight line type vertically.
